# DEMANDE DE BREVET EUROPEEN

(11) **EP 1 870 354 A1**
(43) Date de publication de la demande: **26.12.2007**
(21) Numéro de dépôt: 07011938.3
(22) Date de dépôt: 19.06.2007
(51) Int. Cl.: B65G 1/04, A01J 25/16

(54) **Ensemble de manutention d'un produit, notamment dans le domaine de l'agroalimentaire**

(30) Priorité: 21.06.2006 FR 0605552
(71) Demandeur: EVOLI SAS, 25770 Serre les Sapins (FR)
(72) Inventeur: Aymonier, Alain, 25000 Besançon (FR)
(74) Mandataire: Bentz, Jean-Paul

(57) **Abrégé**

Ensemble (1) de manutention d'un produit (2), notamment dans le domaine de l'agroalimentaire, de façon à le saisir, le traiter, le déplacer ou le remettre à sa place, caractérisé en ce qu'il comprend un chariot autonome (4) susceptible de se déplacer dans un couloir d'exercice, ledit chariot (4) comportant des moyens (6) de préhension du produit (2) sur le rayonnage, selon une direction (F1, F2) perpendiculaire à celle (F3) d'avancement du chariot (4) dans le couloir d'exercice.

## Description

La présente invention concerne un ensemble de manutention d'un produit, notamment dans le domaine de l'agroalimentaire.

Il pourra s'agir, à titre d'exemple non limitatif, d'une tomme de fromage devant être saisie sur un rayonnage, en vue de la traiter, puis de la déplacer ou la remettre en lieu et place sur le rayonnage.

Ces tommes sont parfois très lourdes à manipuler par un opérateur, sachant qu'elles peuvent peser environ 60 kg, pour un diamètre de 75 cm et une hauteur de 14 cm.

Il est évident qu'il s'agit d'un travail pénible pour l'opérateur, et il a déjà été imaginé d'y remédier en proposant des chaînes de transfert automatisées, ou encore des robots très perfectionnés, mais qui coûtent très cher.

De plus, ce type de dispositif est d'un accès difficile, voire impossible dans les petites caves d'affinage où les couloirs d'exercice sont étroits et ne permettent pas le retournement des robots sur eux-mêmes, par rotation par exemple.

La présente invention a pour but de remédier à ces inconvénients et concerne à cet effet un ensemble de manutention d'un produit, notamment dans le domaine de l'agroalimentaire, de façon à le saisir, le traiter, le déplacer ou le remettre à sa place, caractérisé en ce qu'il comprend :
- un chariot autonome susceptible de se déplacer dans un couloir d'exercice selon une direction linéaire, le long d'au moins une rangée de rayonnages sur lesquels sont disposés en attente les produits à traiter, ledit chariot comportant au moins un support fixe sur lequel sont agencés
- des moyens de préhension du produit sur le rayonnage, actionnables en translation vers celui-ci, selon une direction sensiblement perpendiculaire à celle d'avancement du chariot dans le couloir d'exercice linéaire, vers la droite et/ou vers la gauche, pour se glisser sous le produit et le ramener vers le support fixe en vue de son traitement par un opérateur, ou de son transport.

On comprend bien par là que le déplacement de l'ensemble de manutention est linéaire et sans rotation d'aucune de ses parties constitutives.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 représente, en perspective, un ensemble de manutention selon l'invention, par rapport à un opérateur.
La figure 2 représente, en vue de dessus, les moyens de préhension du produit sur le rayonnage.
Les figures 3, 4 et 5 représentent une vue en coupe selon la ligne AA de la figure 2, respectivement :
   - en position d'initialisation, c'est-à-dire dans l'axe vertical XX' de l'ensemble de manutention selon la figure 1,
   - en position de déplacement maximum en translation vers la droite desdits moyens de préhension, après préhension précisément du produit,
   - le retour vers la gauche, vers la position initiale, avec le produit, en vue de son traitement successif.

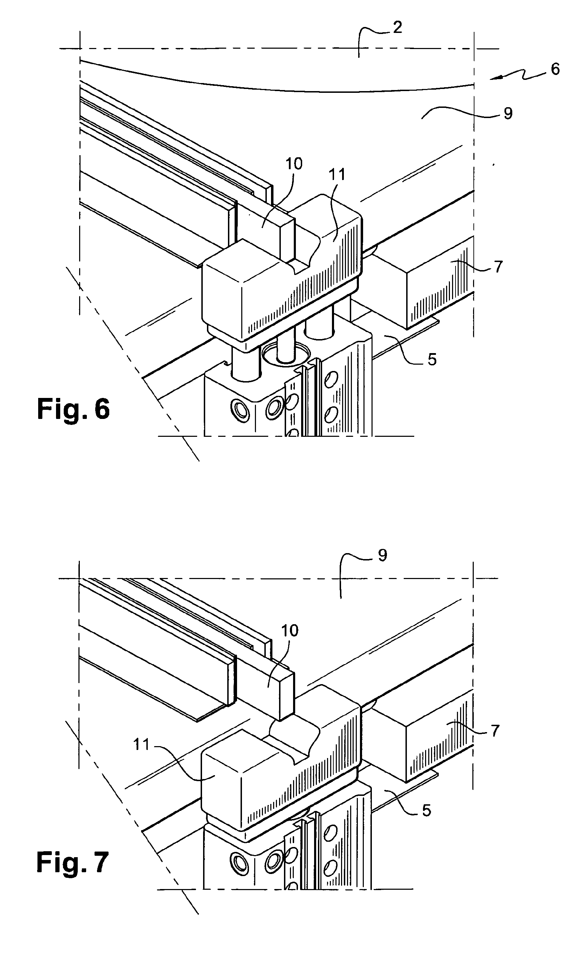

Les figures 6 et 7 représentent respectivement en perspective et à échelle agrandie des moyens d'immobilisation ou de libération d'un tapis de sole constituant les moyens de préhension du produit.

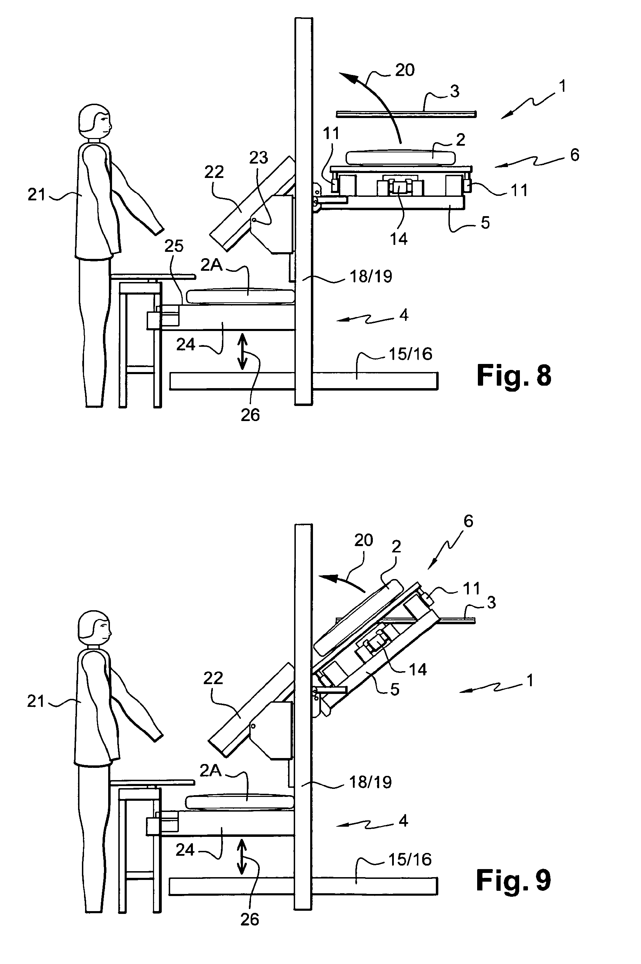

Les figures 8 à 16 représentent les différentes étapes d'un cycle de préhension, de traitement du produit et de remise en lieu et place de celui-ci, effectué par l'ensemble de manutention selon l'invention.

L'ensemble 1 globalement désigné sur les figures est destiné à la manutention d'un produit 2, en l'occurrence une tomme de fromage.

Bien entendu, cet exemple d'application n'est pas limitatif, et il pourrait s'agir d'un quelconque produit.

Cet ensemble est donc destiné à saisir, traiter, déplacer ou remettre en place ladite tomme de fromage, à partir d'un rayonnage 3, désigné sur les figures 8 à 16.

D'une manière globale, l'ensemble 1 comporte, selon l'invention :
- un chariot autonome 4 susceptible de se déplacer dans un couloir d'exercice selon une direction linéaire F3, le long d'au moins une rangée de rayonnages 3 sur lesquels sont disposés en attente les produits 2 à traiter, ledit chariot 4 comportant au moins un support fixe 5 sur lequel sont agencés
- des moyens 6 de préhension du produit 2 sur le rayonnage 3, actionnables en translation vers celui-ci, selon une direction F1, F2 sensiblement perpendiculaire à celle F3 d'avancement du chariot 4 dans le couloir d'exercice linéaire, vers la droite et/ou vers la gauche, pour se glisser sous le produit 2 et le ramener vers le support fixe 5 en vue de son traitement par un opérateur, ou de son transport.

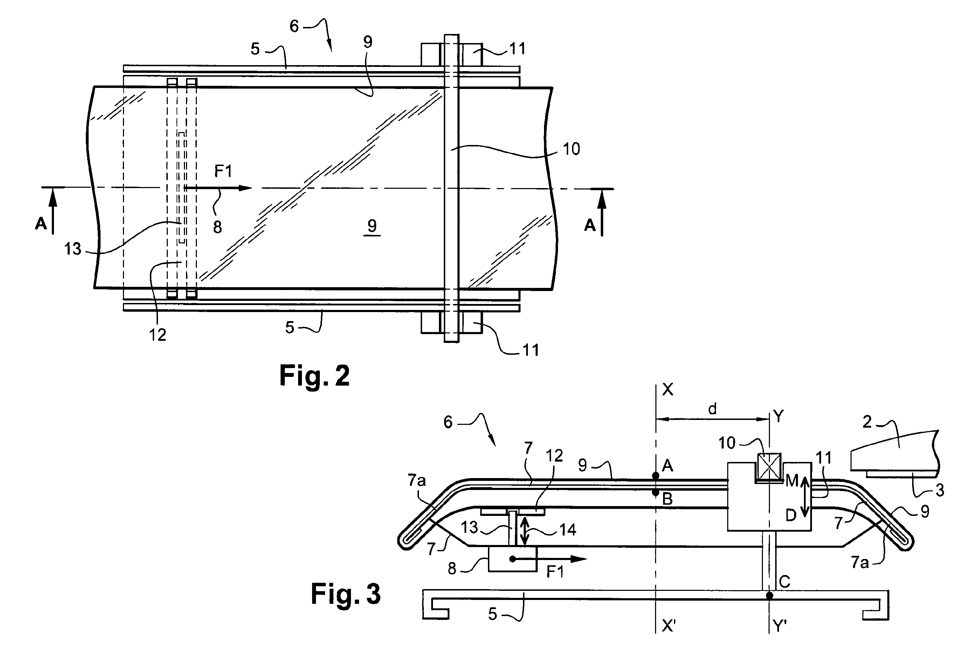

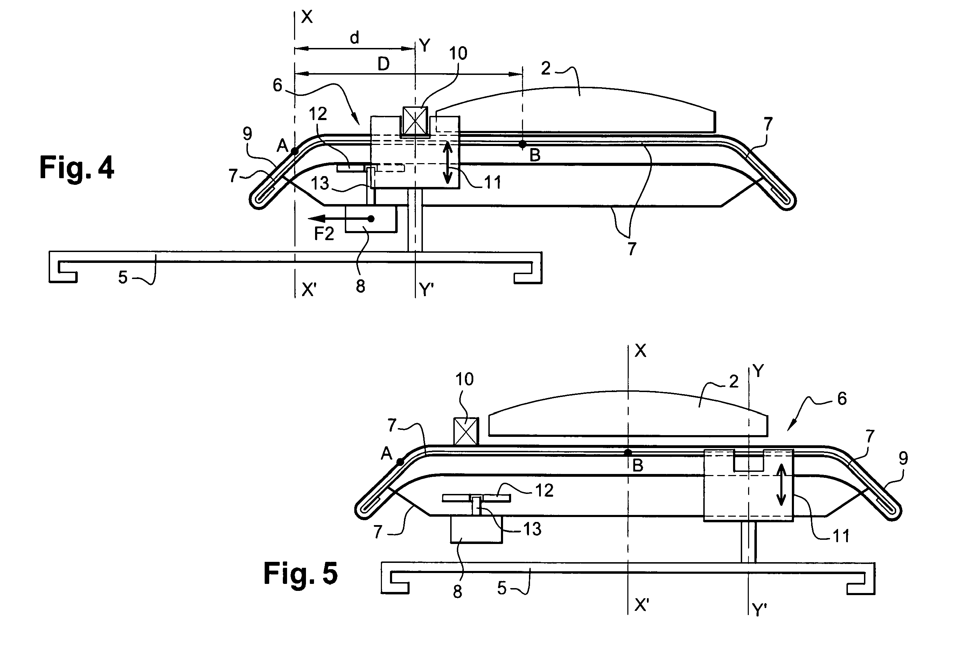

Selon une caractéristique essentielle de l'invention, les moyens de préhension 6 sont constitués par :
- une sole plane 7, mobile en translation, vers la droite et/ou vers la gauche, par rapport au support fixe 5, par l'intermédiaire d'un élément moteur de translation 8, solidaire de la sole 7,
- un tapis 9 enveloppant librement la sole 7 dans le sens de la translation F1, F2 et solidaire d'une barrette transversale 10 susceptible de coopérer ou non avec des moyens d'immobilisation ou de libération 11, actionnables en montée M ou en descente D par rapport à un point fixe C du support 5, de manière telle que, d'une part, tout déplacement de la sole 7 dans un sens F1 de préhension (voir figure 4) du produit 2 à partir d'une position initiale (voir figure 3), après immobilisation du tapis 9, provoque un glissement relatif, selon une distance D prédéfinie, d'un point de référence milieu B de la sole 7 par rapport à un point A de référence du tapis 9, préalablement en concordance dans la position d'initialisation, permettant ainsi à ladite sole 7 de passer sous le tapis 9 intercalé, relativement immobile, et conséquemment pour une préhension du produit 2 sans frottement, alors que, d'autre part, tout déplacement de la sole 7 dans un sens F2 de retour (voir figure 5) vers la position initiale, après préhension du produit 2 et après libération du tapis 9, s'effectue sans déplacement relatif du tapis 9 par rapport à la sole 7.

Selon une autre caractéristique de l'invention, la sole 7 est solidarisée de l'élément moteur de translation 8 par l'intermédiaire d'au moins un élément rigide rainuré 12, fixé transversalement sous la sole 7, à gauche et/ou à droite, selon le sens de déplacement choisi, ladite rainure 12 étant susceptible d'être mise en liaison avec une barre correspondante 13, solidaire du moteur de translation 8, par des moyens de levée et de descente 14 de celle-ci.

Préférentiellement, les moyens 11 d'immobilisation et de libération de la barrette 10 solidaire du tapis 9 sont au nombre de deux, disposés de part et d'autre du tapis 9, en vis-à-vis, pour un meilleur guidage linéaire.

Selon le présent exemple de réalisation, de manière à rendre réversibles, droite-gauche, les moyens de préhension 6, les moyens 11 d'immobilisation et de libération de la barrette 10 solidaire du tapis 9 sont au nombre de quatre, disposés deux à deux, de part et d'autre du tapis 9, en vis-à-vis, à proximité de son extrémité droite et de son extrémité gauche, pour une translation à droite ou une translation à gauche.

D'une manière générale, l'élément moteur de translation 8 de la sole 7, les moyens d'immobilisation et de libération 11 de la barrette 10 du tapis 9, les moyens de levée et de descente 14, sont constitués par des vérins hydrauliques.

Bien entendu, ceux-ci pourraient être remplacés par tout moyen, comme par exemple des moteurs électriques.

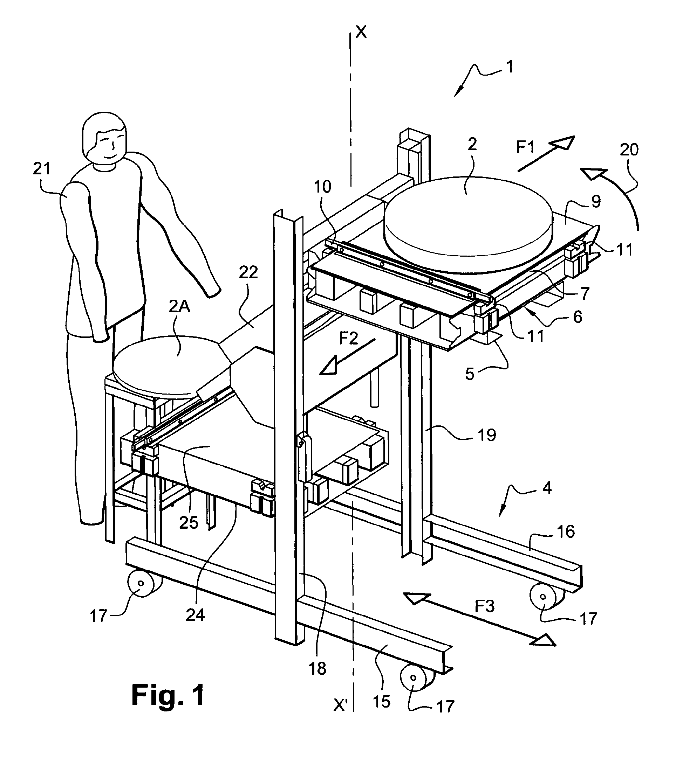

Par ailleurs, les figures 1 et 8 à 16 montrent bien que le chariot autonome 4 est constitué par un châssis comprenant deux poutres parallèles horizontales 15, 16, munies à leurs extrémités respectives de roulettes de transport 17, et deux poutre verticales 18, 19 issues des poutres horizontales 15, 16, et sur lesquelles coulisse en montée et en descente le support 5 de sole 7, de manière à l'amener devant un rayonnage choisi 3 du produit 2 à préhender.

Il est à préciser ici que ce chariot autonome 4 peut être déplacé par un moteur, mais également par poussée manuelle.

Le chariot autonome 4 comporte en outre :
- des moyens de basculement 20 du support 5 de sole 7, après préhension transversale du produit 2 sur le rayonnage 3 et son retour, en position initiale, dans l'axe vertical XX' du châssis 4, de manière à diriger le produit 2 vers un opérateur 21, pour traitement ;
- des moyens de réception 22 du produit 2 basculé, en position inclinée ;
- des moyens de redressement vertical 23 du produit 2 pour une saisie aisée par l'opérateur 21, en vue du traitement du produit 2, hors chariot 4 ;
- une table de dépose 24 du produit 2 après traitement, comportant des moyens de transfert 25 vers le support 5 de sole 7 constituant les moyens de préhension initiaux 6, mis en attente après basculement dans une position basse B, à même hauteur que les moyens de dépose 24 et de transfert 25 précités, afin de reprendre ledit produit 2 et le remettre en lieu et place sur le rayonnage 3, après relevage vertical du support 5 de sole 7 le long des poutres verticales 18, 19 du chariot 4, puis translation vers la droite ou vers la gauche.

Par ailleurs, la table de dépose 24 comporte des moyens d'actionnement 26 en montée et en descente verticale, le long des poutres 18, 19 du chariot 4.

Les moyens de transfert 25 de la table de dépose 24 du produit 2 vers le support 5 de sole 7, lorsque celui-ci est en attente en position basse B, sont constitués par un tapis roulant entourant la table 24, susceptible d'être entraîné en rotation selon un sens perpendiculaire à celui du support 5 de sole 7.

En fait, il pourrait s'agir d'un dispositif semblable à celui de la sole 7 par rapport au tapis 9 destiné à la préhension du produit 2 sur le rayonnage 3, comme décrit précédemment .

Selon une caractéristique avantageuse de l'invention, les extrémités latérales, dans le sens de la translation, de la sole 7, et conséquemment du tapis l'entourant, sont conformées en biseau 7a, 7b, afin de faciliter leur introduction sous le produit 2 et donc la préhension de celui-ci.

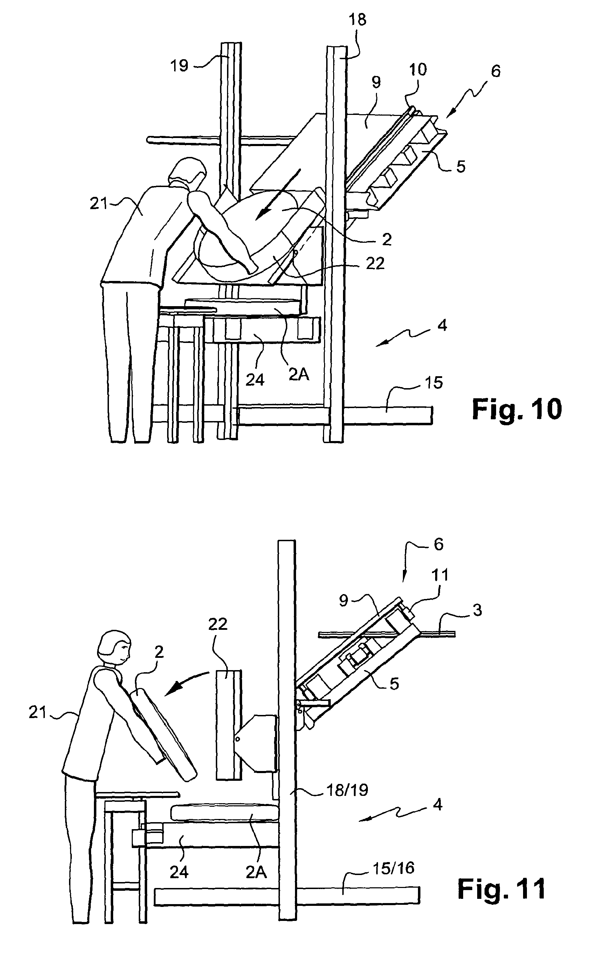

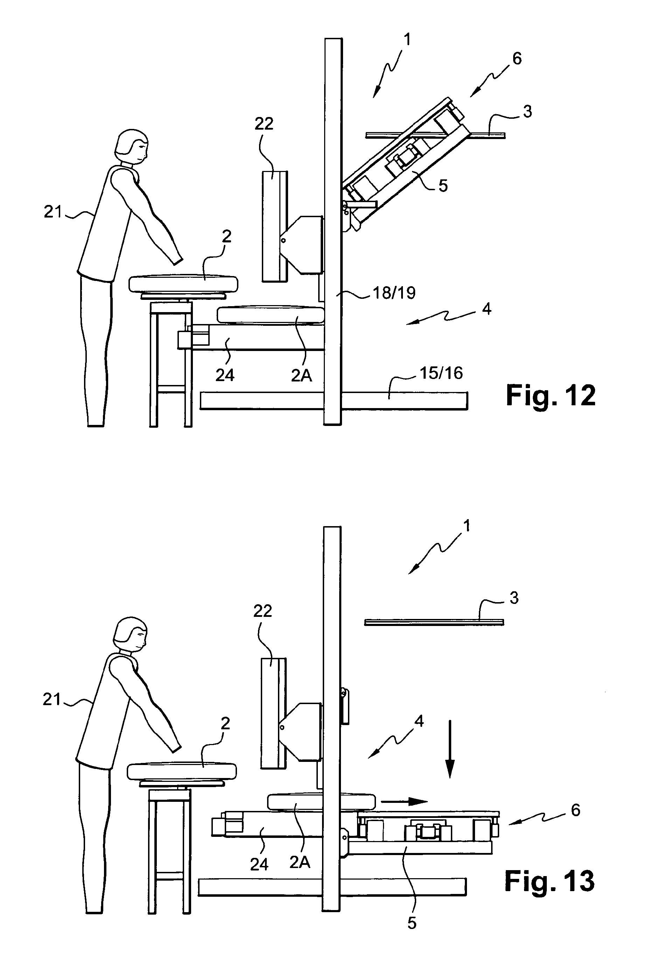

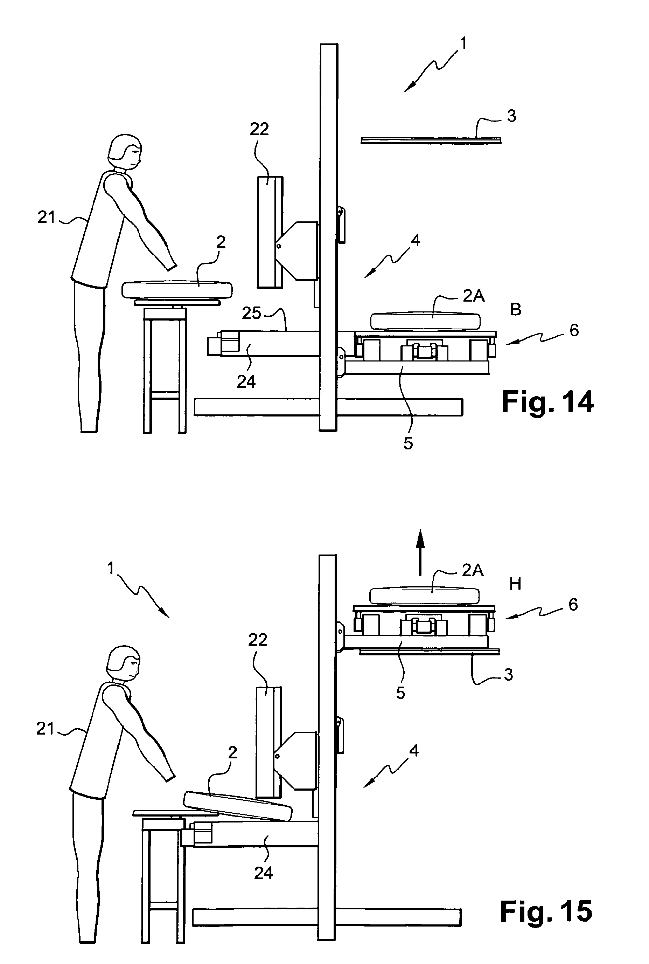

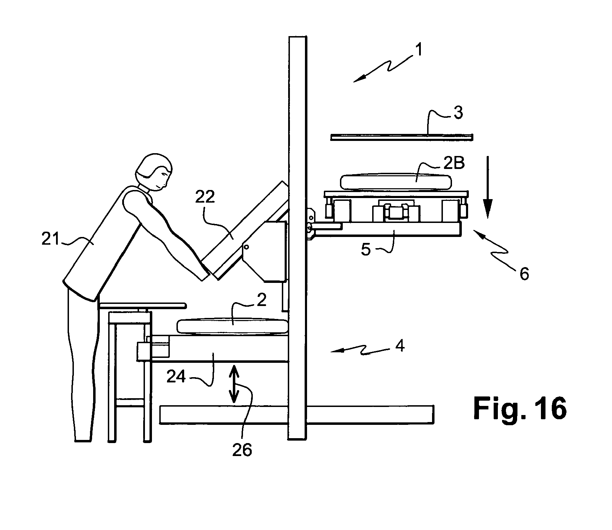

Le fonctionnement de l'ensemble de manutention 1 qui vient d'être décrit ci-dessus est le suivant :
- Après que la préhension du produit 2 ait été effectuée par la sole 7 et que celle-ci soit revenue à sa position initiale (voir figure 1 à 5), le support 5 de sole 7 est déplacé vers le bas pour être mis en regard des moyens de réception 22, préalablement inclinés grâce aux moyens de rotation 23 (voir figure 8).
- Des moyens de basculement 20 agissent sur l'ensemble des moyens de préhension 6, pour faire glisser le produit 2 vers des moyens de réception 22 se trouvant en position inclinée (voir figure 9) .
- L'opérateur 21 réceptionne le produit 2 (voir figure 10).
- L'opérateur redresse à la verticale les moyens de réception 22 autour de l'articulation 23, afin de sortir le produit 2 des moyens de réception 22 en vue du traitement du produit 2 hors chariot 4 (voir figures 11 et 12).
- Pendant les opérations de traitement du produit 2 par l'opérateur 21, il est procédé à la descente des moyens de préhension 6 pour les placer dans une position basse « B », de manière à l'amener en vis-à-vis de la table de dépose 24 sur laquelle est déjà en attente un produit 2A précédemment traité par l'opérateur 21, en vue de sa remise en rayon (voir figure 13).
- Transfert du produit 2A préalablement traité de la table de dépose 24 vers les moyens de préhension 6 (voir figure 14).
- Remontée vers une position haute « H » des moyens de préhension 6, au dessus du rayonnage 3, pour remise en place du produit 2A traité, de la même manière que lors de sa préhension lors du retrait de la sole de dessous le produit 2, afin d'effectuer sa dépose sans frottement, comme lors de la préhension.
- Remontée de la table de dépose 24 vers le produit 2 en cours de traitement, de manière à y être déposé (voir figure 15).
- Remise en position inclinée des moyens de réception 22 et descente nouvelle des moyens de préhension 6, après avoir préhendé un nouveau produit 2 à traiter, en vue de son basculement vers les moyens de réception 22 (voir figure 16).
- Le cycle qui vient d'être décrit recommence autant de fois que nécessaire.

## Revendications

1. Ensemble (1) de manutention d'un produit (2), notamment dans le domaine de l'agroalimentaire, de façon à le saisir, le traiter, le déplacer ou le remettre à sa place, du type comprenant :
- un chariot autonome (4) susceptible de se déplacer dans un couloir d'exercice selon une direction linéaire (F3), le long d'au moins une rangée de rayonnages (3) sur lesquels sont disposés en attente les produits (2) à traiter, ledit chariot (4) comportant au moins un support fixe (5) sur lequel sont agencés
- des moyens (6) de préhension du produit (2) sur le rayonnage (3), actionnables en translation vers celui-ci, selon une direction (F1, F2) sensiblement perpendiculaire à celle (F3) d'avancement du chariot (4) dans le couloir d'exercice linéaire, vers la droite et/ou vers la gauche, pour se glisser sous le produit (2) et le ramener vers le support fixe (5) en vue de son traitement par un opérateur, ou de son transport,
**caractérisé en ce que** les moyens de préhension (6) sont constitués par :
- une sole plane (7), mobile en translation, vers la droite et/ou vers la gauche, par rapport au support fixe (5), par l'intermédiaire d'un élément moteur de translation (8), solidaire de la sole (7),
- un tapis (9) enveloppant librement la sole (7) dans le sens de la translation (F1, F2) et solidaire d'une barrette transversale (10) susceptible de coopérer ou non avec des moyens d'immobilisation ou de libération (11), actionnables en montée (M) ou en descente (D) par rapport à un point fixe (C) du support (5), de manière telle que, d'une part, tout déplacement de la sole (7) dans un sens (F1) de préhension du produit (2) à partir d'une position initiale, après immobilisation du tapis (9), provoque un glissement relatif, selon une distance (D) prédéfinie, d'un point de référence milieu (B) de la sole (7) par rapport à un point (A) de référence du tapis (9), préalablement en concordance dans la position d'initialisation, permettant ainsi à ladite sole (7) de passer sous le tapis (9) intercalé, relativement immobile, et conséquemment pour une préhension du produit (2) sans frottement, alors que, d'autre part, tout déplacement de la sole (7) dans un sens (F2) de retour vers la position initiale, après préhension du produit (2) et après libération du tapis (9), s'effectue sans déplacement relatif du tapis (9) par rapport à la sole (7).

2. Ensemble selon la revendication 1, **caractérisé en ce que** la sole (7) est solidarisée de l'élément moteur de translation (8) par l'intermédiaire d'au moins un élément rigide rainuré (12), fixé transversalement sous la sole (7), à gauche et/ou à droite, selon le sens de déplacement choisi, ladite rainure (12) étant susceptible d'être mise en liaison avec une barre correspondante (13), solidaire du moteur de translation (8), par des moyens de levée et de descente (14) de celle-ci.

3. Ensemble selon l'une des revendications 1 ou 2, **caractérisé en ce que** les moyens (11) d'immobilisation et de libération de la barrette (10) solidaire du tapis (9) sont au nombre de deux, disposés de part et d'autre du tapis (9), en vis-à-vis, pour un meilleur guidage linéaire.

4. Ensemble selon la revendication 3, **caractérisé en ce que** les moyens (11) d'immobilisation et de libération de la barrette (10) solidaire du tapis (9) sont au nombre de quatre, disposés deux à deux, de part et d'autre du tapis (9), en vis-à-vis, à proximité de son extrémité droite et de son extrémité gauche, pour une translation à droite ou une translation à gauche.

5. Ensemble selon l'une des revendications 1 à 4, **caractérisé en ce que** l'élément moteur de translation (8) de la sole (7), les moyens d'immobilisation et de libération (11) de la barrette (10) du tapis (9), les moyens de levée et de descente (14), sont constitués par des vérins hydrauliques.

6. Ensemble selon la revendication 5, **caractérisé en ce qu'**il comporte en outre :
- des moyens de basculement (20) du support (5) de sole (7), après préhension transversale du produit (2) sur le rayonnage (3) et son retour, en position initiale, dans l'axe vertical (XX') du châssis (4), de manière à diriger le produit (2) vers un opérateur (21), pour traitement ;
- des moyens de réception (22) du produit (2) basculé, en position inclinée ;
- des moyens de redressement vertical (23) du produit (2) pour une saisie aisée par l'opérateur (21), en vue du traitement du produit (2), hors chariot (4) ;
- une table de dépose (24) du produit (2) après traitement, comportant des moyens de transfert (25) vers le support (5) de sole (7) constituant les moyens de préhension initiaux (6), mis en attente après basculement dans une position basse (B), à même hauteur que les moyens de dépose (24) et de transfert (25) précités, afin de reprendre ledit produit (2) et le remettre en lieu et place sur le rayonnage (3), après relevage vertical du support (5) de sole (7) le long de deux poutres verticales (18, 19) du chariot (4), issues de deux poutres horizontales (15, 16) de celui-ci, puis translation vers la droite ou vers la gauche.

7. Ensemble selon la revendication 6, **caractérisé en ce que** la table de dépose (24) comporte des moyens d'actionnement (26) en montée et en descente verticale, le long des poutres (18, 19) du chariot (4).

8. Ensemble selon l'une des revendications 6 et 7, **caractérisé en ce que** les moyens de transfert (25) de la table de dépose (24) du produit (2) vers le support (5) de sole (7), lorsque celui-ci est en attente en position basse (B), sont constitués par un tapis roulant entourant la table (24), susceptible d'être entraîné en rotation selon un sens perpendiculaire à celui du support (5) de sole (7).

9. Ensemble selon l'une des revendications 1 à 8, **caractérisé en ce que** les extrémités latérales, dans le sens de la translation, de la sole (7), et conséquemment du tapis l'entourant, sont conformées en biseau (7a, 7b), afin de faciliter leur introduction sous le produit (2) et donc la préhension de celui-ci.
